# EUROPEAN PATENT APPLICATION

(11) **EP 2 738 416 A1**
(43) Date of publication of application: **04.06.2014**
(21) Application number: 12194573.7
(22) Date of filing: 28.11.2012
(51) Int. Cl.: F16F 1/18, F16F 7/10, F16C 11/12

(54) **Flexure joint for high precision relative movement of devices or parts of devices**

(71) Applicant: University Of Twente, 7500 AE Enschede (NL)
(72) Inventor: Wiersma, Hedzer, 7500 AE Enschede (NL); Aarts, Ronald, 7500 AE Enschede (NL); Boer, Steven, 7500 AE Enschede (NL); Brouwer, Dannis, 7500 AE Enschede (NL)
(74) Representative: Van Breda, Jacobus

(57) **Abstract**

Flexure joint (1) arranged for high precision relative movement of devices or parts of devices (2,3) interconnected by said joint, comprising at least one leaf spring (4) providing a first relatively low stiffness in its bendable direction (A) in comparison with a second relatively high stiffness in the plane (C,D,E) of said leaf spring, wherein the leaf spring is provided with transversely mounted spring bodies (5,6,7,8) on opposite sides of said leaf spring so as to provide torsional stiffness to the leaf spring.

## Description

The invention relates to a flexure joint arranged for high precision relative movement of devices or parts of devices interconnected by said joint, comprising at least one leaf spring providing a first relatively low stiffness in its bendable direction in comparison with a second relatively high stiffness at least in the plane of said leaf spring.

EP-A-2 031 258 discloses a flexural joint configured to connect a first and a second element to each other, wherein the joint has at least one orthogonal rotational degree of freedom and is configured to block at least one translational degree of freedom. It is applied in connection with a car suspension system.

US-B-6,879,377 is an example in which a flexure joint is used as part of a lithographic projection apparatus. Figure 3 of this patent publication shows in combination a series of flexible metal bellows and conduit plates. The conduit plates may be deemed leaf springs. The use of such conduit plates or leaf springs as flexure joints is advantageous in high precision applications such as in the semiconductor and nanotechnology industry due to their being free of hysteresis, friction and backlash.

A problem with using leaf springs as the elements providing the flexure capability of the flexure joint, is that such leaf springs suffer from severe deterioration of its stiffness values in the plane of the leaf spring when the spring makes relatively high excursions from its neutral position. This particularly applies to a deterioration of torsional rigidity or stiffness of the leaf spring which becomes prominent when the leaf spring is subjected to differently directed forces at opposite edges of the leaf spring.

It is an object of the invention to alleviate this problem and design the flexure joint of the invention in a way that it maintains a proper degree of torsional rigidity and bending stiffness.

The flexure joint of the invention is to this end provided with the features of one or more of the appended claims.

According to a first aspect of the invention the leaf spring is provided with transversely mounted spring bodies on opposite sides of said leaf spring which provide relatively high torsional stiffness to the leaf spring. It is possible to mount these spring bodies as separate components to the leaf spring. From the perspective to avoid hysteresis it is however advantageous that the spring bodies are made monolithic with the leaf spring. This applies particularly to high precision and MEMS applications.

Good results may be achieved by having the transversely mounted spring bodies mounted on opposite sides of said leaf spring at an angle within the range 30° -- 90°.

To promote the torsional stiffness of the leaf spring, the transversely or laterally mounted spring bodies that are jointly provided on the same side of the leaf spring share a stiff connection with each other distant from the leaf spring. The flexure joint of the invention thus allows for relatively large excursions from its neutral position with reduced and only limited loss of its stiffness in relation to torsional loading and bending of the spring.

The flexure joint of the invention is suitably embodied such that at least one of the transversely mounted spring bodies extends away from a position on the leaf spring approximately in the middle between the leaf spring's extremities.

For optimal effectiveness the transversely mounted spring bodies and the leaf spring connect to each other along their entire width.

An aspect of the invention is that on each side defined by the plane of the leaf spring there are two spring bodies extending transversely away from the leaf spring, one of said two spring bodies extending away approximately from the middle of the leaf spring and one of said two spring bodies extending away from the leaf spring near or at one of its extremities.

Furthermore it is appropriate that the two spring bodies extending transversely away from the leaf spring on said leaf spring's opposite sides are staggered with respect to each other, such that the spring bodies extending oppositely away from a position near or at an extremity of the leaf spring are arranged at different extremities.

Another aspect of the invention is that obliquely through an aperture in the leaf spring a further spring is mounted connecting to the devices or parts of devices on opposite sides of the leaf spring. This further promotes stiffness of the flexure joint of the invention with reference to translations in a direction transverse to the plane of the leaf spring.

The invention will hereinafter be further elucidated with reference to the drawing.

In the drawing:
- figure 1 shows the flexure joint of the invention connecting two devices or parts of devices;
- figure 2 shows the flexure joint of figure 1 separately;
- figure 3 shows a cross-section of the flexure joint of figure 2;
- figure 4 shows a side view of the flexure joint as shown in figure 1.

Whenever in the figures the same reference numerals are applied, these numerals refer to the same parts.

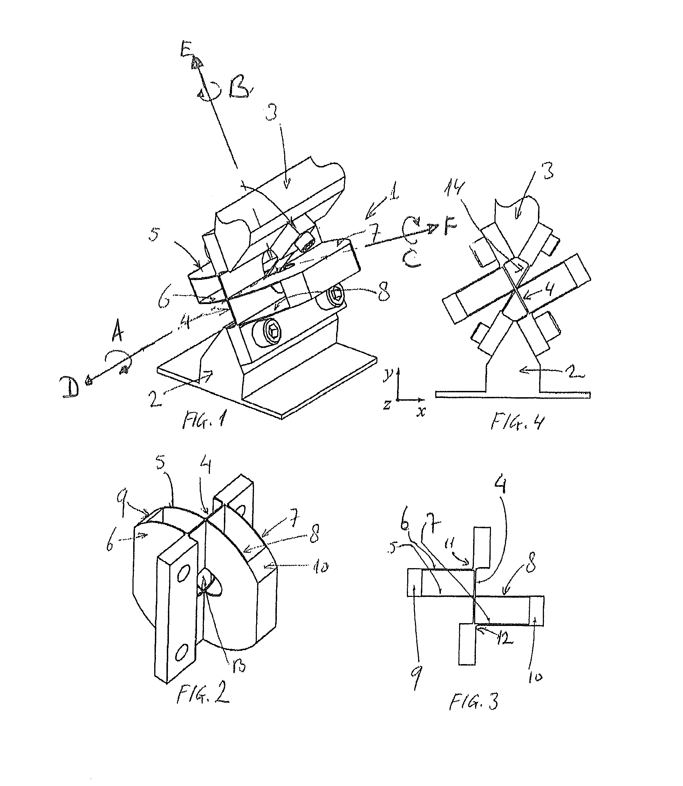

The flexure joint of the invention is generally denoted with reference 1 in figure 1 and is arranged for high precision relative movement of devices or parts of devices 2, 3 interconnected by said joint 1. The joint 1 comprises at least one leaf spring 4 providing a first relatively low stiffness in its bendable direction (which is indicated with arrow A) in comparison with a second relatively high stiffness at least in the plane of said leaf spring 4. This high stiffness applies both in the longitudinal direction E of the leaf spring 4 as well as in the transverse direction D of the leaf spring 4 and in the rotational direction C in the plane of the leaf spring 4.

According to the invention the leaf spring 4 is provided with spring bodies 5, 6, 7, 8 that are transversely mounted on opposite sides of said leaf spring 4. This is clearly shown in figure 2. The transversely mounted spring bodies 5, 6, 7, 8 provide relatively high stiffness to the joint 1 in the rotational direction B and ensure maintenance of the stiffness at a high level in translational direction D and rotational direction C. The transversely mounted spring bodies 5, 6, and 7, 8 respectively that are jointly provided on the same side of the leaf spring 4 share a stiff connection 9, 10 with each other distant from the leaf spring 4. As is particularly clear from both figure 2 and figure 3 at least one of the transversely mounted spring bodies extends away from a position on the leaf spring 4 approximately in the middle between the leaf spring's extremities 11, 12. This applies to both spring body 6 on one side of the leaf spring 4 and to spring body 7 on the opposite side of the leaf spring 4.

Figure 1 and figure 2 both show that the transversely mounted spring bodies 5, 6, 7, 8 and the leaf spring 4 connect to each other along their entire width. More in particular: spring body 5 connects to leaf spring 4 and to the stiff connection 9 alone its entire width; spring body 6 connects to the stiff connection 9 and two leaf spring 4 along its entire width; spring body 7 connects to leaf spring 4 and to the stiff connection 10 along its entire width; and spring body 8 connects to leaf spring 4 and to the stiff connection 10 along its entire width. It is further shown that on each side defined by the plane of the leaf spring 4 there are two spring bodies 5, 6 and 7, 8 respectively, extending transversely away from the leaf spring 4, one of said two spring bodies, notably spring body 6 on one side and spring body 7 on the other side, extending away approximately from the middle of the leaf spring 4, and one of said two spring bodies, notably spring body 5 and spring body 8, extending away from the leaf spring 4 near or at one of the leaf spring's extremities 11, 12.

Figure 1 and figure 2 also most clearly show that the two spring bodies 5, 6 and 7, 8 extending transversely away from the leaf spring 4 on said leaf spring's opposite sides are staggered with respect to each other, such that the spring bodies 5, 8 extending oppositely away from a position near or at an extremity 11, 12 of the leaf spring 4 are arranged at different extremities.

Finally figure 4 is provided to show that obliquely through an aperture 13 (see figure 2) in the leaf spring 4 a further spring 14 is mounted connecting to the devices or parts of devices 2, 3 on opposite sides of the leaf spring 4. This further spring 14 provides relatively high stiffness for translations in direction F transverse to the plane of the leaf spring 4.

It is explicitly remarked that the gist of the invention as embodied in the appended claims is not restricted by the foregoing example which relates to an exemplary embodiment of a flexure joint according to the invention. This exemplary embodiment is merely provided to elucidate any possible ambiguity in the wording of the claims without intention to limit the claims to this specific exemplary embodiment. The protective scope that merits the invention is therefore only defined by the appended claims.

## Claims

1. Flexure joint and (1) arranged for high precision relative movement of devices or parts of devices (2, 3) interconnected by said joint (1), comprising at least one leaf spring (4) providing a first relatively low stiffness in its bendable direction (A) in comparison with a second relatively stiffness at least in the plane (C, D, E) of said leaf spring (4), **characterized in that** the leaf spring (4) is provided with transversely mounted spring bodies (5, 6, 7, 8) on opposite sides of said leaf spring (4) so as to provide relatively high torsional stiffness (B) to the leaf spring (4).

2. Flexure joint (1) according to claim 1, **characterized in that** the transversely mounted spring bodies (5, 6; 7, 8) that are jointly provided on the same side of the leaf spring (4) share a stiff connection (9, 10) with each other distant from the leaf spring (4).

3. Flexure joint (1) according to claim 1 or 2, **characterized in that** at least one of the transversely mounted spring bodies (6; 7) extends away from a position on the leaf spring (4) approximately in the middle between the leaf spring's extremities (11, 12).

4. Flexure joint (1) according to any one of claims 1-3, **characterized in that** the transversely mounted spring bodies (5, 6, 7, 8) and the leaf spring (4) connect to each other along their entire width.

5. Flexure joint (1) according to any one of the previous claims, **characterized in that** on each side defined by the plane of the leaf spring (4) there are two spring bodies (5, 6; 7, 8) extending transversely away from the leaf spring (4), one (6; 7) of said two spring bodies extending away approximately from the middle of the leaf spring (4) and one (5; 8) of said two spring bodies extending away from the leaf spring (4) near or at one of its extremities (11, 12).

6. Flexure joint (1) according to claim 5, **characterized in that** the two spring bodies (5, 6; 7, 8) extending transversely away from the leaf spring (4) on said leaf spring's opposite sides are staggered with respect to each other, such that the spring bodies (5, 8) extending oppositely away from a position near or at an extremity (11, 12) of the leaf spring (4) are arranged at different extremities.

7. Flexure joint (1) according to any one of the previous claims, **characterized in that** obliquely through an aperture (13) in the leaf spring (4) a further spring (14) is mounted connecting to the devices or parts of devices (2, 3) on opposite sides of the leaf spring (4).

8. Flexure joint (1) according to any one of the previous claims, **characterized in that** the transversely mounted spring bodies (5, 6, 7, 8) are mounted on opposite sides of said leaf spring (4) at an angle within the range 30° -- 90°.
